Europäisches Patentamt

European Patent Office

Office européen des brevets

(11) Publication number: **0 064 980**
**B1**

(12) **EUROPEAN PATENT SPECIFICATION**

(45) Date of publication of patent specification: **30.07.86**

(21) Application number: **81901394.7**

(22) Date of filing: **24.11.80**

(86) International application number:
**PCT/US80/01566**

(87) International publication number:
**WO 82/01941 10.06.82 Gazette 82/15**

(51) Int. Cl.⁴: **G 01 N 21/85**

(54) **SYSTEM AND PROCESS FOR MEASURING THE CONCENTRATION OF A GAS IN A FLOWING STREAM OF GASES.**

(43) Date of publication of application:
**24.11.82 Bulletin 82/47**

(45) Publication of the grant of the patent:
**30.07.86 Bulletin 86/31**

(84) Designated Contracting States:
**AT CH DE FR GB LI LU NL SE**

(56) References cited:
**DE-A-2 116 381**
**DE-A-2 314 827**
**GB-A-1 327 377**
**US-A-3 796 887**
**US-A-3 885 162**

(73) Proprietor: **MEASUREX CORPORATION**
**One Results Way**
**Cupertino, California 95014 (US)**

(72) Inventor: **SHAFER, Howard**
**19919 Pear Tree Lane**
**Cupertino, CA 95014 (US)**
Inventor: **SMITH, Vigo**
**19768 Solana Drive**
**Saratoga, CA 95070 (US)**
Inventor: **TYPPO, Pekka Matti**
**10301 Richwood Drive**
**Cupertino, CA 95014 (US)**

(74) Representative: **Bayliss, Geoffrey Cyril et al**
**BOULT, WADE & TENNANT 27 Furnival Street**
**London EC4A 1PQ (GB)**

The file contains technical information
submitted after the application was filed and
not included in this specification

Courier Press, Leamington Spa, England.

## Description

This invention concerns a system for determining the concentration of a particular gas in a flowing stream of gases.

Energy is often produced by the combustion of fossil fuels, and the combustion process generates gases which are discharged through a stack to the atmosphere. The exhaust gases are normally a mixture of chemical compounds including, for example, carbon monoxide, carbon dioxide, sulphur dioxide, nitrogen oxide and other gases as well as solid particles. Regulatory agencies often require that no more than specified maximum qualities of the gases and particulates be discharged through the stack to the atmosphere. Consequently, to comply with such regulations, it is necessary to determine the concentration of particular gases in the stream of gases in the stack.

British Patent 1,327,377 teaches a system for measuring the concentration of particulates in exhaust gases passing through a stack. The system includes a cylinder which can be mounted in the stack so that exhaust gases containing particulates flow through ports in the cylinder. At one end of the cylinder a lamp and a photocell are mounted, and at the other end is mounted a reflecting prism. In operation, light from the lamp travels through the cylinder and is reflected from the prism back to the photocell. During the passage of light through the cylinder, the particulates intercept part of the light beam thereby attenuating it. Consequently, the response of the photocell is used to determine the concentration of particulates in the gas. This system would be unsuitable for measuring the concentration of a particular gas for various reasons. For example, variability in the concentration of particles in the cylinder would introduce unpredictable variation in any measurement of light received by the photocell. Also, particles would build up inside the cylinder thereby introducing unpredictable variability in any measurement of received light.

U.S.—A—3796887 discloses a system for measuring the concentration of a gas in a flowing stream of gases comprising light generating means for generating a beam of light, light detection means for receiving the beam of light from the light generating means and generating a signal corresponding to the intensity of the received beam of light, a probe coupled to said light generating means and said light detection means for disposition in the flowing stream of gases the probe including a light pipe having its first end adjacent the light generation and light detection means and its second end spaced therefrom with reflection means at the second end for reflecting light travelling along a first path from the light generating means to said reflection means along a second path from said reflection means to said light detection means, the probe having holes in the wall thereof through which gases can pass into the probe from a stream of flowing gas in which the probe is located. The apparatus requires a relatively large diameter pipe in order to accommodate the transmitted and reflected beams of light and as a result it is not sensitive to very small changes in concentration in the gas entering the probe. Further, particles in the gas entering the probes through the holes in the probe wall are likely to deflect the transmitted and reflected light beams passing along the probe excessively attenuating the paths of the beam and causing inaccurate assessment of the gas concentration in the probe.

This invention provides a system for measuring the concentration of a gas in a flowing stream of gases comprising: light generating means for generating a beam of light; light detection means for receiving a beam of light from said light generating means and generating a signal corresponding to the intensity of the received beam of light; a hollow elongate probe for disposition in the flowing stream of gases, the probe having said light generating means and said light detection means at one end thereof, an opening or openings in the probe wall to permit gases to pass from said stream of flowing gases to the interior of the probe and reflection means at the other end of the probe to reflect light travelling along the probe from the light generating means back to the light detection means, characterised in that the probe comprises first and second light pipes the first light pipe having its first end adjacent said light generating means and its second end adjacent said reflection means and the second light pipe having its first end adjacent said light detection means and its second end adjacent the reflection means whereby light emitted from the generation means passes along the first light pipe to the reflection means by which it is reflected back along the second light pipe to the detection means; and in that each light pipe has gas permeable means disposed in openings in the light pipes to permit gases but not particulate material to pass from said stream of flowing gases into the interior of said light pipes.

The system may further include seal means disposed inside said first and second light pipes to seal the first ends of the light pipes and being adjustable along the pipes to permit precise control of the length of the column of gas in said pipes.

More specifically said seal means may include two plates sealingly connected one inside each said light pipe, said plates being formed of material which is transparent to light generated by said light generation means.

Preferably said light pipes are substantially cylindrical and are disposed parallel to one another so that said probe can be located in a flowing stream of gases with one pipe above the other and the axes of both pipes perpendicular to the flow of gas.

In the latter case said gas permeable means may include a plurality of ports formed in the sides of each light pipe and located so that a plane coincident with the ports in both light pipes would be substantially parallel to the direction of flow of the gases.

The system may further include standardisation means which may include a conduit coupled in a gas-flow communication with at least one of said light pipes and means to supply standardisation gas to at least one of said light pipes via said conduit wherein said conduit is located adjacent said probe so that when said probe is located in a stream of flowing gases the conduit and the standardisation gas flowing therethrough are substantially the same temperature as the flowing gases.

The invention also provides a process for measuring the concentration of the gas flowing in a stream of gases comprising; interposing a probe in the flowing stream of gas, introducing gases into the probe from the flowing stream of gases, transmitting a beam light through the probe from one end thereof and reflecting the beam at the other end back to said one end so that the beam is attenuated by the gas in the pipes and measuring the intensity of the light beam leaving the probe at said one end, wherein a beam of light is transmitted through a first cylindrical light pipe from one end thereof to a reflector at the other end thereof the reflector being coupled between one end of the first light pipe and the adjacent end of a second cylindrical light pipe disposed parallel to the first light pipe, the beam is further transmitted back along the second light pipe to emerge therefrom for the intensity of the light beam to be measured; and in that gases introduced into the probe are filtered by gas only permeable means to prevent any particulate matter from entering the light pipes of the probe.

The following is a description of a specific embodiment of the invention, reference being made to the accompanying drawings in which:

Figure 1 is a side view of the preferred embodiment shown cut away.

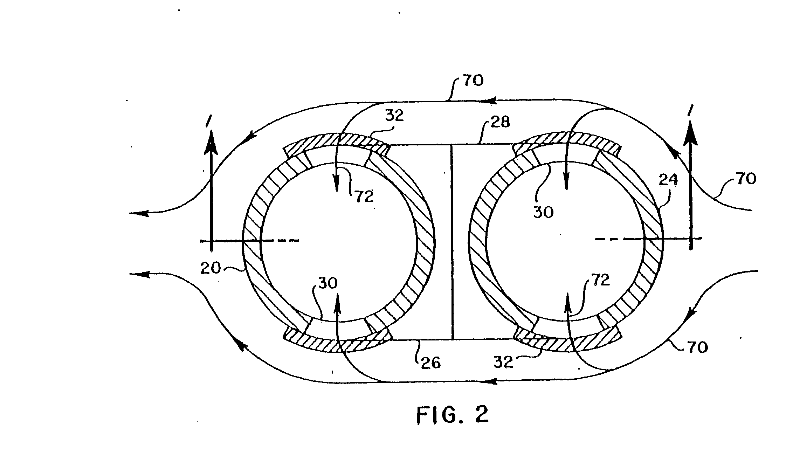

Figure 2 is a cross section of the view shown in Figure 1 cut along line 2—2.

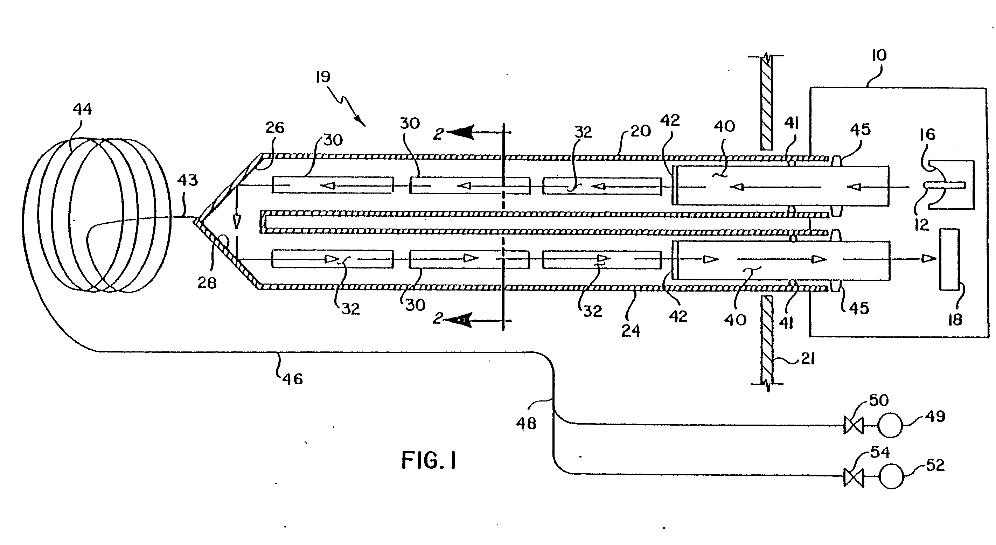

With reference to Figure 1, the presently preferred embodiment includes a support frame 10 having mounted thereon a light source 12 coupled to a reflector 16 for collating the light and directing it. As used herein, the word "light" includes infrared, visible, ultraviolet and other similar electromagnetic radiation. Also coupled to the support frame near the source 12 is a Detector 18 for detecting light from the source 12 and generating an electrical signal corresponding to the intensity thereof. Coupled to the detector 18 is a means, not shown, for receiving and processing the signal from the detector. Also coupled to the support frame 10 is a probe 19 which is shown inserted through the wall of a stack 21. The probe 19 includes an upper light pipe 20 and a lower light pipe 24. The light pipes 20 and 24 include cylinders having their interior surfaces formed of buffed metal. The upper light pipe 20 is located with its right end adjacent to the light source 12 so that the light collimated by the reflector 16 is received by the right end of the light pipe 20 to travel through the light pipe from right to left according the arrows in Figure One.

At the left end of the Upper Light Pipe 20 there is a coupled an upper reflection means 26. The reflection means or mirror 26 includes a flat metal plate having its interior surface formed of buffed metal. Coupled to the lower side of the upper reflection means 26 is a lower reflection means or mirror 28 which, like the upper reflector means 26, is formed of buffed metal.

The lower light pipe 24 is coupled at its left end to the right side of lower mirror 28. Thus, the upper and lower reflector means 26 and 28 form a gas-tight connection between the left ends of the upper and lower light pipes 20 and 24. Also, the upper and lower reflector means 26 and 28 provide reflecting surfaces to reflect light from the left end of upper light pipe 20 downward into the lower light pipe 24 and therethrough. The right end of the lower light pipe 24 is coupled to the support frame adjacent to the detector 18 so that substantially all light leaving the right end of the light pipe 24 impinges upon the detector 18.

Three ports 30 are formed in each side of each light pipes 20 and 24. Pieces of gas-permeable material 32 are affixed on the outside of the light pipes to permit the passage of gas but not particulate material through the ports 30. In practice, a preferable material for forming the permeable material 32 is porous stainless steel felt which we have found to permit the passage of gas while permitting no substantial particulate material to pass therethrough.

Seal means including a cylinder 40 and a disk 42 are disposed in the right ends of each of the light pipes 20 and 24. In particular, each cylinder 40 has an open right end and is sealed closed on its left end by a disk 42. The cylinders 40 have raised portions 45 near their right ends so that the cylinders 40 can be inserted into the light pipes a predetermined distance until the raised portions contact the light pipes. Each cylinder 40 is sized to fit snugly inside a light pipe, and o-rings 41 cooperate with the cylinders and light pipes to aid sealing. Thus gas is prevented from leaving the right ends of the light pipes.

With further reference to Figure One, there is shown a standardization system coupled to the probe 19. The standardization system includes a conduit 43 connected in gas flow communication to the probe 19 at the junction of the mirrors 26 and 28. Near the left end of the probe 19 the conduit 43 is formed into a coil 44. The coil 44 is coupled to a conduit 46 which is substantially parallel to and adjacent to lower light pipe 24. The conduit 46 is coupled to a tee 48 which in turn is coupled to valves 50 and 54. Valve 50 is coupled to a source of gas 49, and valve 54 is coupled to a different source of gas 52.

Turning to Figure Two, the probe is shown in cross section as it interrupts the stream of gas flowing through stack 21. The flow of gases is illustrated by arrows 70. Thus it can be seen that ports 30 are located so that the stream of gas does not impinge directly upon the gas permeable material 32. Rather, the ports 30 are located so that the flow of gas is substantially tangential to the material 32. Thus, particulate material travelling with the gas 70 does not tend to lodge in the gas permeable material 32 but passes by the gas permeable material with the effect that the material 32 is kept relatively clean while permitting gas to pass therethrough as shown by arrows 72. This advantageous location of the ports 32 can be described in that the ports are located so that a plane coincident with the ports in both light pipes would be substantially parallel to the direction of flow of the gases.

In operation, the probe 19 is inserted into the stack 21 so that a stream of flowing gases passes around the probe 19. Gases permeate through the gas permeable material 32, thereby filling the light pipes 20 and 24 with gas which is the same as the gas in the stack 21 except that the gas within the light pipes 20 and 24 contains no substantial concentration of particulates. It should be understood that due to the location of the ports 30 the concentration of gases in the light pipes 20 and 24 rapidly becomes the same as the concentration of gases in the stack 21. Our testing has shown that it normally takes less than about 20 seconds for equilibrium to be achieved between the gas inside the stack and the gas inside the light pipes. More specifically, in our tests when the gas in the stack changes concentration, the concentration of the gas in the pipes reaches 95% of its final value in less than about 20 seconds.

The seals are disposed in the light pipes so that their raised portions 45 abut the ends of the pipes. Thus the disks 42 are located a predetermined distance from the right ends of the light pipes, and the column of gas contained in the light pipes between the disks 42 is a predetermined length which can be precisely controlled. The control of this length is critical because the absorption of light by the column of gas in the light pipes is directly dependent upon the length of the column of gas. Thus, the ability to control the length of the column of gas is directly related to the accuracy of the measurements obtained by the system. In practice, we have found that our disks 42 coupled to cylinders 40 provide an extremely accurate means of controlling the length of the column of gas.

The light source 12 generates a beam of light which travels through the light pipes as shown by the arrows and impinges upon the detector 18. In practice, if it is desired to measure the concentrations of carbon monoxide (CO) and carbon dioxide ($CO_2$) for example, the light emitted by the source 12 should be in the infrared range. The disks 42 must be formed of a material which is transparent to the light generated by the source 12. For example, if infrared light is used, the disks 42 can be formed of sapphire.

It can now be appreciated that the light travelling through the light pipes 20 and 24 travels a precisely controlled distance through the gas in the probe. That is, light travels between the disk 42 in the upper probe 20 to the reflector 26, and thence to the reflector 28 and thence to the disk 42 in the lower light pipe 24 while passing through the gas in the probe. This is true regardless of the existence of any scratches or other aberrations in the light pipes and regardless of the presence of any particulate material in the light pipes. On the other hand, if a system utilizing a single cylinder, such as that taught in British Patent 1,327,377 discussed above, were used to measure the concentration of gases, light could be reflected from particulate material in the gas or from scratches or other aberrations without travelling a predetermined distance through the gas. Thus, the extent of absorption of the light would be dependent, in part, on these variable factors and therefore not completely predictable. This would lead to erroneous measurements of the concentration of gas.

After the present system has been operating for some time, it may become necessary to perform a standardization operation to achieve the highest possible accuracy due to electronic drift and other factors. The first step in standardization includes flushing the probe with clean air from outside the stack. This is accomplished by opening the valve 50 and pumping air via pump 49 through conduit 43 into the probe. The air then flows outward through the ports 30 thereby filling the probe with clean air and dislodging any particulates which may be trapped in the permeable material 32.

After clean air has filled the probe 19, air is still pumped into the probe 19 to keep it filled with clean air against the pressure of gas surrounding the probe. It is known that the concentration of carbon monoxide and carbon dioxide is approximately zero, therefore measurements of these two gases are taken, and if they are not measured as zero the system is calibrated to zero. Thereafter, the valve 50 is closed and the valve 54 is opened so that a stream of carbon monoxide and carbon dioxide of known concentration can be pumped into the probe 19 from container 52. The mixture of carbon monoxide and carbon dioxide fills the probe 19, and the mixture of gases is continually pumped thereinto against the pressure of gases surrounding the probe 19. While the probe is filled with the mixture of gases of known concentration, the concentrations of the two gases are measured. If the measured concentrations do not equal the known concentrations, the system is adjusted.

After the calibration and zeroing are completed, the system has been standardized. Valve 54 is then closed and the system can resume normal operation. It should be understood that during the determination of gas zero ratios and the upscale calibration check, it is important that the gas within the probe 19 be at substantially the same temperature as the gas in the stack 21. To accomplish this, the air from source 49 and gases from source 52 are passed through the coil 44 located near the left end of the probe 19. The coil 44 is located in the stream of gases flowing through the stack 21 so that the gases in the coil 44 are heated to substantially the same temperature as the gases in the stack.

## Claims

1. A system for measuring the concentration of a gas in a flowing stream of gases comprising: light generating means (12) for generating a beam of light; light detection means (18) for receiving a beam of light from said light generating means and generating a signal corresponding to the intensity of the received beam of light; a hollow elongate probe (19) for disposition in the flowing stream of gases, the probe having said light generating means and said light detection means at one end thereof, an opening or openings (30) in the probe wall to permit gases to pass from said stream of flowing gases to the interior of the probe and reflection means (26, 28) at the other end of the probe to reflect light travelling along the probe from the light generating means back to the light detection means, characterised in that: the probe (19) comprises first and second light pipes (20, 24) the first light pipe having its first end adjacent said light generating means (12) and its second end adjacent said reflection means (26) and the second light pipe having its first end adjacent said light detection means (18) and its second end adjacent the reflection means (28) whereby light emitted from the generation means passes along the first light pipe to the reflection means by which it is reflected back along the second light pipe to the detection means; and in that each light pipe has gas permeable means (32) disposed in openings (30) in the light pipes to permit gases but not particulate material to pass from said stream of flowing gases into the interior of said light pipes.

2. A system according to claim 1 and further including seal means (40—42) disposed inside said first and second light pipes (20, 24) to seal the first ends of the light pipes and being adjustable along the pipes to permit precise control of the length of the column of gas in said pipes.

3. A system according to claim 2, characterised in that said seal means includes two plates (42) sealingly connected one inside each said light pipe (20, 24), said plates being formed of material which is transparent to light generated by said light generation means.

4. A system according to any of claims 1 to 3, characterised in that said light pipes (20, 24) are substantially cylindrical and are disposed parallel to one another so that said probe (19) can be located in a flowing stream of gases with one pipe above the other and the axes of both pipes perpendicular to the flow of gas.

5. A system according to claim 4 characterised in that said gas permeable means (32) includes a plurality of ports (30) formed in the sides of each light pipe (20, 24) and located so that planes coincident with the ports in both light pipes would be substantially parallel to the direction of flow of the gases.

6. A system according to any of the preceding claims and further including standardization means (44).

7. A system according to claim 6, characterised in that said standardization means includes a conduit (43) coupled in glas-flow communication with at least one of said light pipes (20, 24) and means to supply standardization gas to at least one of said light pipes via said conduit wherein said conduit is located adjacent said probe so that when said probe is located in a stream of flowing gases the conduit and the standardisation gas flowing therethrough are substantially the same temperature as the flowing gases.

8. A process for measuring the concentration of the gas flowing in a stream of gases comprising; interposing a probe in the flowing stream of gas, introducing gases into the probe from the flowing stream of gases, transmitting a beam of light through the probe from one end thereof and reflecting the beam at the other end back to said one end so that the beam is attenuated by the gas in the pipe and measuring the intensity of the light beam leaving the probe at said one end; characterised in that the beam of light is transmitted through a first cylindrical light pipe from one end thereof to a reflector at the other end thereof, the reflector being coupled between one end of the first light pipe and the adjacent end of a second cylindrical light pipe disposed parallel to the first light pipe, the beam is further transmitted back along the second light pipe to emerge therefrom for the intensity of the light beam to be measured and in that gases introduced into the probe are filtered by gas only permeable means to prevent any particulate matter from entering the light pipes of the probe.

## Revendications

1. Système pour mesurer la concentration d'un gaz dans un courant de gaz en écoulement, comprenant: des moyens générateurs de lumière (12) pour engendrer un faisceau de lumière; des moyens de détection de lumière (18) pour recevoir un faisceau de lumière des moyens générateurs de lumière et engendrer un signal correspondant à l'intensité du faisceau de lumière reçu; une sonde allongée creuse (19) pour la disposition dans le courant de gaz en écoulement, la sonde ayant les dits moyens générateurs de lumière et les dits moyens de détection de lumière à l'une de ses extrémités, une ou des ouvertures (30) dans la paroi de la sonde pour permettre à des gaz de passer du courant de gaz en écoulement à l'intérieur de la sonde et des moyens de réflexion (26, 28) à l'autre extrémité de la sonde pour réfléchir à nouveau vers les moyens de détection de lumière de la lumière se propageant le long de la sonde et venant des moyens générateurs de lumière, caractérisé en ce que la sonde (19) comprend un premier et un deuxième conduits à lumière (20, 24), le premier tube à lumière ayant sa première extrémité adjacente aux dits moyens générateurs de lumière (12) et sa deuxième extrémité adjacente aux dits moyens de réflexion (26) et le deuxième tube à lumière ayant sa première extrémité adjacente aux dits moyens de détection de lumière (18) et sa deuxième extrémité adjacente aux dits moyens de réflexion de lumière (28), de sorte que de la lumière émise des moyens générateurs de lumière se rend le long du premier tube à lumière aux moyens de réflexion, par lesquels elle est réfléchie à nouveau, le long du deuxième tube à lumière vers les moyens de détection; et en ce que chaque tube à lumière a des moyens perméables aux gaz (32) disposés dans des ouvertures (30) des tubes à lumière pour permettre à des gaz, mais non à de la matière en particules, de passer dudit courant de gaz en écoulement à l'intérieur des dits tubes à lumière.

2. Système selon la revendication 1, comprenant en outre des moyens d'étanchéité (40, 42) disposés à l'intérieur des premier et deuxième tubes à lumière (20, 24) pour boucher les premières extrémités des tubes à lumière et qui sont réglables le long des tubes pour permettre un réglage précis de la longueur de la colonne de gaz dans ces tubes.

3. Système selon la revendication 2, caractérisé par le fait que les moyens d'étanchéité comprennent deux plaques (42) reliées de façon étanche, une à l'intérieur de chaque tube à lumière (20, 24), ces plaques étant formées de matière qui est transparente à la lumière engendrée par les moyens générateurs de lumière.

4. Système selon l'une quelconque des revendications 1 à 3, caractérisé par le fait que les tubes à lumière (20, 24) sont pratiquement cylindriques et sont disposés parallèlement l'un à l'autre, de sorte que la sonde (19) peut être placée dans un courant de gaz en écoulement, un tube étant au-dessus de l'autre et les axes des deux tubes étant perpendiculaires à l'écoulement de gaz.

5. Système selon la revendication 4, caractérisé par le fait que les moyens perméables aux gaz (32) comprennent plusieurs orifices (30) formés dans les côtés de chaque tube à lumière (20, 24) et placés de telle sorte qu'un plan coïncidant avec les orifices des deux tubes à lumière serait pratiquement parallèle à la direction d'écoulement des gaz.

6. Système selon l'une quelconque des revendications précédentes, comprenant en outre des moyens de normalisation (44).

7. Système selon la revendication 6, caractérisé par le fait que les moyens de normalisation comprennent un conduit (43) accouplé en communication pour l'écoulement de gaz à au moins un des dits tubes (20, 24) à lumière et des moyens pour fournir du gaz de normalisation à au moins un des dits tubes à lumière en passant par le dit conduit, dans lesquels le conduit est situé auprès de la sonde, de sorte que, quand la sonde est placée dans un courant de gaz en écoulement, le conduit et le gaz de normalisation s'écoulant au travers sont pratiquement à la même température que les gaz en écoulement.

8. Procédé pour mesurer la concentration du gaz s'écoulant dans un courant de gaz, consistant: à interposer une sonde dans le courant de gaz en écoulement, à introduire dans la sonde des gaz venant du courant de gaz en écoulement, à transmettre un faisceau de lumière à travers la sonde, depuis une première extrémité de celle-ci et à réfléchir à nouveau le faisceau, à l'autre extrémité, vers la dite première extrémité, de sorte que le faisceau est atténué par le gaz contenu dans les tubes, et à mesurer l'intensité du faisceau de lumière quittant la sonde à ladite première extrémité, caractérisé en ce que le faisceau de lumière est émis à travers un premier tube à lumière cylindrique, d'une première extrémité de celui-ci à un réflecteur à l'autre extrémité de celui-ci, le réflecteur étant couplé entre une extrémité du premier tube à lumière et l'extrémité adjacente d'un deuxième tube à lumière cylindrique disposé parallèlement au premier tube à lumière, le faisceau étant ensuite transmis à nouveau le long du deuxième tube à lumière pour sortir de celui-ci afin que l'intensité du faisceau de lumière soit mesurée; et en ce que les gaz introduits dans la sonde sont filtrés par des moyens perméables aux gaz seulement pour empêcher toute matière en particules d'entrer dans les tubes à lumière de la sonde.

**Patentansprüche**

1. System zur Messung der Konzentration eines Gases in einer Strömung von Gasen mit: Einer Lichterzeugungseinrichtung (12) zur Erzeugung eines Lichtstrahls; einer Lichtdetektierungseinrichtung (18) zum Empfang eines Lichtstrahls von der Lichterzeugungseinrichtung und zur Erzeugung eines Signals entsprechend der Intensität des empfangenen Lichtstrahls; einer hohlen länglichen Sonde (19) zur Anordnung in der Gasströmung, wobei die Sonde die Lichterzeugungseinrichtung und die Lichtdetektierungseinrichtung an ihrem einen Ende aufweist, sowie eine Öffnung oder Öffnungen (30) in der Sondenwandung aufweist, um Gase von der Gasströmung in das Innere der Sonde zuzuführen und Reflexionseinrichtungen (26, 28) am anderen Ende der Sonde, um das von der Lichterzeugungseinrichtung ausgehende entlang der Sonde geführte Licht in die Lichtdetektierungseinrichtung zurückzureflektieren, dadurch gekennzeichnet, daß: die Sonde (19) einen ersten und einen zweiten rohrförmigen Lichtleiter (20, 24) aufweist, wobei das erste Ende des ersten Lichtleiters an die Lichterzeugungseinrichtung (12) angrenzt und sein zweites Ende an die Reflexionseinrichtung (26) angrenzt und das erste Ende des zweiten Lichtleiters an die Lichtdetektierung (18) und sein zweites Ende an die Reflexionseinrichtung (28) angrenzt, sodaß das von der Erzeugungseinrichtung emittierte Licht durch den ersten Lichtleiter zu der Reflexionseinrichtung geführt wird, von der es entlang des zweiten Lichtleiters auf die Detektierungseinrichtung zurückreflektiert wird; und, daß jeder Lichtleiter gasdurchlässige Einrichtungen (32) aufweist, die in den Öffnungen (30) der Lichtleiter angeordnet sind, um den Zugang von Gasen, aber nicht Feststoffteilchen von dem Gasstrom in das Innere der Lichtleiter zu ermöglichen.

2. System nach Anspruch 1, gekennzeichnet durch innerhalb des ersten und des zweiten Lichtleiters (20, 24) angeordnete Dichtungseinrichtungen (40—42) zur Abdichtung der ersten Enden der Lichtleiter und entlang der Lichtleiter einstellbar, um eine präzise Einstellung der Gasschichtdicke in den Lichtleitern zu ermöglichen.

3. System nach Anspruch 2, dadurch gekennzeichnet, daß die Dichtungseinrichtungen zwei Scheiben (42) beinhalten, die dichtend mit den Innenseiten der Lichtleiter (20, 24) verbunden sind, wobei diese Scheiben aus einem Material gefertigt sind, für das in der Lichterzeugungseinrichtung erzeugte Licht transparent ist.

4. System nach einem der Ansprüche 1 bis 3, dadurch gekennzeichnet, daß die Lichtleiter (20, 24) im wesentlichen zylindrisch und parallel zueinander angeordnet sind, so daß die Sonde (19) in einer Gasströmung so angeordnet werden kann, daß ein Lichtleiter oberhalb des anderen ist und die Achsen der beiden Lichtleiter senkrecht zu der Gasströmung sind.

5. System nach Anspruch 4, dadurch gekennzeichnet, daß die gasdurchlässigen Einrichtungen (32) eine Anzahl von Öffnungen (30) in den Seiten jedes Lichtleiters (20, 24) aufweisen, die so angeordnet sind, daß Ebenen, die mit den Öffnungen in beiden Lichtleitern zusammenfallen, im wesentlichen parallel zu der Richtung der Gasströmung wären.

6. System nach einem der vorstehenden Ansprüche, gekennzeichnet durch eine Normierungseinrichtung (44).

7. System nach Anspruch 6, dadurch gekennzeichnet, daß die Normierungseinrichtung eine Gasleitung (43) beinhaltet, die gasdurchlässig mit zumindest einem der Lichtleiter (20, 24) verbunden ist, und daß Einrichtungen vorgesehen sind zur Zuführung des Normgases in zumindest einen der Lichtleiter über die Gasleitung, wobei die Gasleitung an der Sonde angrenzend angeordnet ist, so daß, wenn die Sonde sich in einem Gasstrom befindet, die Gasleitung und das durch sie hindurchströmende Normgas im wesentlichen die gleiche Temperatur haben wie die strömenden Gase.

8. Verfahren zur Messung der Konzentration eines Gases in einer Strömung von Gasen mit den Schritten: Anordnung einer Sonde in der Gasströmung, Zuführung von Gasen aus der Strömung in die Sonde, Übertragung eines Lichtstrahles durch die Sonde von deren einem Ende und Rückreflexion des Strahls an dem anderen Ende zu dem einen Ende, so daß der Strahl durch das Gas im Lichtleiter abgeschwächt wird und Messung der Intensität des die Sonde an einem Ende verlassenden Lichtstrahls, dadurch gekennzeichnet, daß der Lichtstrahl durch einen ersten zylindrischen Lichtleiter von dessen einem Ende zu einem Reflektor an dessen anderem Ende geführt wird, wobei der Reflektor zwischen das eine Ende des ersten Lichtleiters und das angrenzende Ende eines zweiten zylindrischen Lichtleiters, der parallel zu dem ersten Lichtleiter angeordnet ist, eingefügt ist, daß der Strahl weiter entlang des zweiten Lichtleiters zurückgeführt wird und diesen verläßt zur Messung der Intensität des Lichtstrahls, und daß die in die Sonde eindringenden Gase durch lediglich gasdurchlässige Einrichtungen gefiltert werden, um ein Eindringen von Feststoffen in die Lichtleiter der Sonde zu verhindern.

FIG. 1

0 064 980

FIG. 2